# EUROPÄISCHE PATENTANMELDUNG

(11) **EP 1 175 860 A1**
(43) Veröffentlichungstag der Anmeldung: **30.01.2002**
(21) Anmeldenummer: 00810661.9
(22) Anmeldetag: 24.07.2000
(51) Int. Cl.: A47G 19/22, B29C 44/12, B65D 81/38

(54) **Behälter und Verfahren zur Herstellung des Behälters**

(71) Anmelder: Hintermeister, Arnold, 8640 Rapperswill (CH)
(72) Erfinder: Hintermeister, Arnold, 8640 Rapperswill (CH)
(74) Vertreter: Hammer, Bruno, Dr.

(57) **Zusammenfassung**

Der wärmeisolierte Behälter (1), weist einen inneren Behälterteil (11) aus flexiblem Kunststoff auf, der von einem äusseren Behälterteil (12) aus mindestens einer flexiblen, wärmeisolierenden Isolationsschicht ummantelt ist. Beim Herstellverfahren für einen derartigen Behälter wird der innere Behälterteil (11) mit einem wärmeisolierenden, flexiblen Kunsttsoff wie etwa Polyurethan, Polyethylen oder Santopren umspritzt oder umschäumt. Der Behälter (1) ist gut wärmeisoliert, weist flexible Wände auf und ist leicht.

## Beschreibung

Die Erfindung bezieht sich auf einen Behälter nach dem Oberbegriff des unabhängigen Anspruchs 1 und auf ein Verfahren zur Herstellung eines derartigen Behälters.

Wärmeisolierende Behälter werden zum Aufbewahren von Flüssigkeiten ganz allgemein und in grosser Zahl auch für das Warmhalten oder Kalthalten von Getränken verwendet. So gibt es die sog. Thermoflaschen und Krüge, die heute meist aus einem evakuierten Glasbehälter (einem sog. Dewargefäss) der mit einer spiegelnden Metallschicht beschichtet ist bestehen, der in einem Gehäuse aus Kunststoff oder Metall vor Bruch geschützt ist. Es sind auch Behälter aus z.B. Styropor bekannt, in welche gewöhnliche Behälter wärmeisoliert gelagert und transportiert werden können.

Es gibt auch Behälter und Gefässe für Getränke, die vor allem aber nicht nur von Sportlern wie Radfahrern, Langstreckenläufern u.s.w. verwendet werden. Die Behälter sind nicht zerbrechlich und in der Regel nicht sehr schwer. Diese Behälter weisen in der Regel eine Deckel mit Trinknippel und Verschluss. Der Verschluss am Trinknippel kann durch Herausziehen und Hineinstossen eines Schieberrohrs geöffnet und wieder geschlossen werden. Die Behälter sind meist aus einem flexiblen, verformbarem Kunststoff wie z.B. Polyäthylen, Polypropylen gefertigt. Solche Getränkeflaschen haben flexible, verformbare Wände, was beim Trinken aus der Flasche viele Vorteile hat, die vor allem bei Sportlern sehr geschätzt werden.

Durch das Zusammenpressen der Wände der Getränkeflaschen, die z.B. von den Radfahrern Bidon genannt werden, wird das Getränk durch spritzen dem Mund des Trinkenden zugeführt. Der Trinkende muss nicht durch mühsames und den Atemapparat zusätzlich belastendes Saugen aus der Flasche entnommen werden. Mit dem Zusammendrücken der Flaschenwände mit der Hand ist es möglich relativ grosse Flüssigkeitsmengen kurzfristig aus der Flasche zu drücken. Die Flüssigkeitsmenge ist um ein Vielfaches grösser als jene, die mit saugen einem Behälter entnommen werden kann.

Die bisherigen Behälter mit flexiblen Wänden haben den Nachteil, dass die Wärmeisolation des Materials sehr schlecht ist. Die Temperatur der Getränke gleicht sich sehr rasch der Umgebungstemperatur and. Warme Getränke werden schnell kalt, kalte Getränke werden schnell warm. Hier bringt der Behälter nach der Erfindung Besserung. Aufgabe der Erfindung ist es, einen Behälter mit flexiblen Wänden zu schaffen, der nicht schwer ist, flexible Wände hat, so dass die Flüssigkeit, bzw. das Getränk aus der Flasche gepresst werden kann, also alle Vorzüge der bisherigen Behälter aufweist und der zudem wesentlich verbesserte wärmeisolierende Eigenschaften ausweist.

Die Aufgabe wird nach der Erfindung mit einem Behälter gelöst, welcher die Merkmale des kennzeichnenden Teils des unabhängigen Anspruchs 1 aufweist. Die abhängigen Ansprüche beziehen sich auf vorteilhafte Ausführungsformen des Behälters nach der Erfindung. Das Verfahren zur Herstellung des Behälters weist die Merkmale des unabhängigen Anspruchs 9 auf. Anspruch 10 bezieht sich auf ein besonders vorteilhaftes Verfahren zum Herstellen des Behälters.

In einem Behälter nach der Erfindung, der als Trinkflasche ausgebildet ist, bleibt ein warmes Getränk wesentlich länger warm, oder gar heiss, bzw. kalt. So kühlt sich ein Getränk, das mit einer Temperatur von etwa 85°C in den Behälter eingefüllt wird, über einen Zeitraum von etwa drei Stunden auf etwa 37°C ab.

Heisse Getränke von 85°C trinkt niemand, kann man nicht trinken, müssen abgekühlt werden. Es ist aber möglich aufgrund der bekannten Abkühlrate, heiss in den Behälter einzufüllen und nach einer vorgegebenen Dauer, wenn die ideale Trinktemperatur erreicht ist z.B. dem Sportler zum Trinken freizugeben, bzw. zu übergeben. Dies ist für die Verpflegung von Ausdauersportarten wichtig, da es damit möglich wird, die Getränke um Stunden vor dem Trinken vorzubereiten.

Durch die gute Isolation des Behälters wird aber auch erreicht, dass die Behälter ohne Probleme in der Hand gehalten werden können, auch wenn sich darin sehr heisse Getränke befinden, was bei einem bisherigen flexiblen, verformbaren Behälter aus Kunststoff nicht ohne weiteres möglich ist.

Die Behälter nach der Erfindung sind sehr leicht. Sie sind sehr bruchsicher, ertragen Schläge, das Herunterfalle leer und gefüllt, ohne dass sie beschädigt werden oder gar brechen. Der relativ weiche äussere Behälterteil vermindert auch in beträchtlichem Umfang die Verletzungsgefahr durch Behälter, die gerade von Sportlern oft unvorsichtig weggeworfen werden.

Das Verwenden eines inneren Behälterteils hat den Vorteil, dass dafür ein Material, z.B. ein bewährter Kunststoff wie Polyäthylen oder Polypropylen ausgewählt werden kann der für Lebensmittel zugelassen ist, keinerlei schädliche Stoffe an das Getränk abgibt und zudem auch noch geruchsneutral ist.

Als äussere Behälterteil sind geschäumte Kunststoffe geeignet. Die im geschäumten Material enthaltenen Gase, Treibgase und Luft welche zur ausgezeichneten thermischen Isolation dieser Werkstoffe beitragen. Geeignet sind z.B. Schaumstoffe aus Polyurethan, Polyäthylen oder etwa Santopren, einem geschäumten Polyurethan, das sich sehr gut zum Umspritzen bzw. zum Umschäumen von Körpern verschiedenster Formen eignet. Alle diese wärmeisolierenden, geschäumten oder anders verarbeiteten Kunststoffe sind relativ leicht, so dass die Behälter nach der Erfindung sehr leicht sind. Diese thermisch isolierenden Kunststoffe für den äusseren Behälterteil können auch mit verschiedensten Farbstoffen eingefärbt werde. Es ist damit möglich, Behälter nach der Erfindung in verschiedenen Farben auszuführen.

Die wärmeisolierenden Eigenschaften des Behälters können noch verbessert werden, wenn z.B. die Aussenwand des inneren Behälterteils mit einer Wärmestrahlen reflektierenden Schicht beschichtet wird. Es kann auch vorgesehen sein, zusätzlich oder nur die Aussenwand des äusseren Behälterteils mit einer derartigen, reflektierenden Schicht zu beschichten. Die Beschichtung des inneren Behälterteils und oder äusseren Behälterteils braucht nicht unbedingt vollständig zu sein, obschon natürlich eine vollständige Beschichtung die besten Ergebnisse bringt. Solche reflektierende Schichten können beispielsweise galvanisch, mit Flammspritzen oder auch als Farbe auf die zu beschichtenden Oberflächen aufgebracht werden.

Eine andere Art die wärmeisolierenden Eigenschaften zu verbessern kann damit erreicht werden, dass der äussere Behälterteil aus mehren Schichten aus dem gleichen oder verschiedenen Werkstoffen aufgebaut ist. Der Übergang von einer Schicht auf die nächste, angrenzende Schicht hemmt zusätzlich die Wärmeleitung.

Der innere Behälterteil wir zwar mit Vorteil mit dem äusseren Behälterteil umspritzt oder umschäumt. Es ist aber auch möglich den inneren und den äusseren Behälterteil je separat zu fertigen und die beiden Behälterteile in einem weiteren Schritt ineinander zu schieben. Je nach Betrachtungsweise wird der innere Behälterteil wir in den äusseren Behälterteil eingeführt oder der äussere Behälterteil wird über den inneren Behälterteil gestülpt.

Als Deckel bzw. Verschluss für den Behälter eignen sich Deckel mit Trinknippel, wie sie bei bekannten Trinkflaschen vorhanden sind. Es ist natürlich möglich, auch solche Deckel zusätzlich mit einer Isolationsschicht zu versehen, z.B. auf der Aussenseite zu umspritzen bzw. zu umschäumen. Die Trinknippel können durch Ziehen oder Drehen des Nippelzapfens geöffnet, bzw. Stossen oder Drehen des Nippelzapfens geschlossen werden. Es kann aber auch ein ganz konventioneller Ausguss mit Schraub oder Schnappverschluss vorgesehen sein. Über dem eigentlichen Deckel mit dem Trinknippel oder mit irgend einer Einfülleinrichtung und/oder einem konventionellen Ausguss kann noch ein Trinkbecher als Überdeckel aufgeschraubt oder mit einem Schnappverschluss vorhanden sein.

Die Aussenfläche des Behälters kann strukturiert sein. Erhöhungen, Vertiefungen wie positive und negative Noppen oder andere Strukturen, auch Schriftzüge, können ästhetisch ansprechend gestaltet werden und den Behälter verzieren. Darüber hinaus haben solche Strukturen auch die Wirkung, dass die Behälter besser in der Hand liegen, besser im Griff sind.

Der wärmeisolierte Behälter, weist einen inneren Behälterteil aus flexiblem Kunststoff aufweist, der von einem äusseren Behälterteil aus mindestens einer flexiblen, wärmeisolierenden Isolationsschicht ummantelt ist. Beim Herstellverfahren für einen derartigen Behälter wird der innere Behälterteil mit einem wärmeisolierenden, flexiblen Kunststoff wie etwa Polyurethan, Polyethylen oder Santopren umspritze oder umschäumt. Der Behälter ist gut wärmeisoliert, weist flexible Wände auf und ist leicht.

Die Erfindung wird nachstehend anhand der schematischen Zeichnungen, welche Ausführungsbeispiele von erfindungsgemässen Behältern zeigen näher erläutert.

### Es zeigen:

Fig. 1 in einer perspektivischen Seitenansicht einen flexiblen verformbaren Behälter der als Trinkbehälter für z.B. Radsportler als Bidon verwendet werden kann.
Fig. 2 den Behälter von Fig. 1 in einem Schnitt nach der Linie I - I

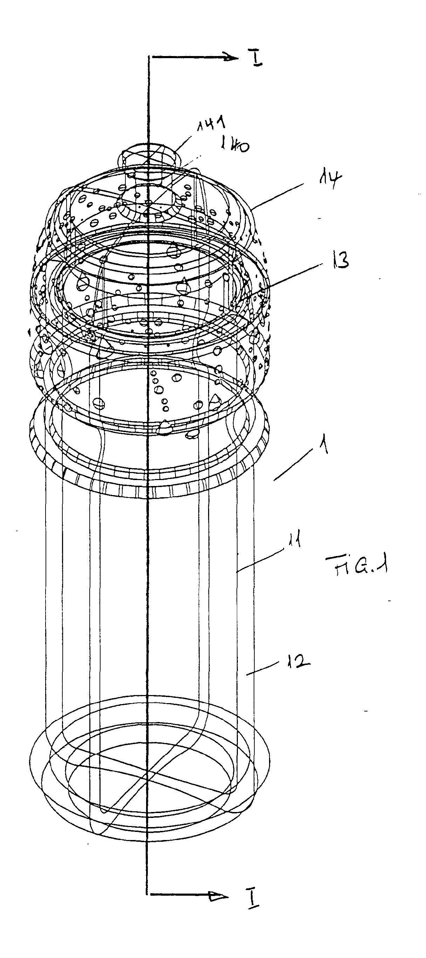

In der schematischen, perspektivischen Seitenansicht von Fig. 1 ist ein Trinkflasche 1 gezeigt, mit einer spritzgeblasenen Polyethylenflasche 11 als innerem Behälterteil. Der äussere Behälterteil 12 wird von einer Schicht aus geschäumten Polyurethan gebildet. Die Polyäthylenflasche 11 wurde mit der Schicht 12 aus geschäumten Polyurethan umspritzt, bzw. umschäumt.

Auf das Gewinde 13 der Polyäthylenflasche 11 ist der Deckel 14 aufgeschraubt. Der Deckel oder Verschluss 14 weist einen Trinknippel 140 auf. Das Öffnen und wieder Verschliessen des Trinknippels 140 erfolgt durch hinausziehen bzw. wieder hineinstossen des Nippeleinsatzes 141 des Trinknippels. Diese Trinknippel 140 können einhändig und mit dem Mund und den Zähnen betätigt werden.

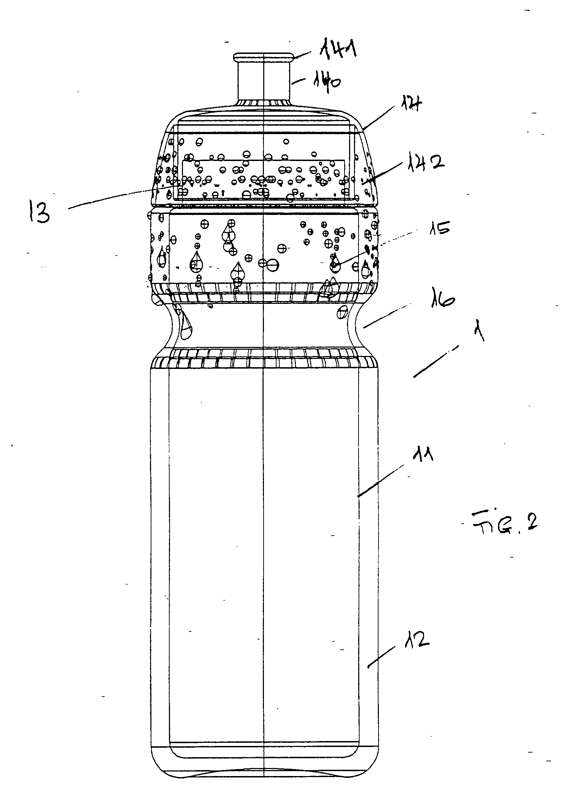

In der geschnittenen Seitenansicht von Fig. 2 ist wiederum der innere Behälterteil, die spritzgeblasene Polyäthylenflasche 11 gezeigt, die von einer geschäumten Polyurethanschicht 12 als äusserem Behälterteil ummantelt ist. Diese Polyurethanschicht 12 weist eine umlaufende Vertiefung 16 und im oberen Teil eine Noppenstruktur 15 auf. Der Deckel bzw. Verschluss 14 ist auf das Gewinde 13 der inneren Polyäthylenflasche 11 aufgeschraubt. Der Deckel 14 ist zusätzlich teilweise mit einer isolierenden Schicht 142 ummantelt.

Obschon das gezeigte Beispiel eines Behälters nach der Erfindung eine Trinkflasche zeigt, die nicht nur aber vor allem für Sportler verwendet wird, kann ein Behälter nach der Erfindung auch als Krug, Thermosflasche der konventionellen Bauweise oder Eisbehälter oder sonst irgendwie ausgebildet und geformt sein.

## Patentansprüche

1. Wärmeisolierter Behälter (1), **dadurch gekennzeichnet, dass** der Behälter einen inneren Behälterteil (11) aus flexiblem Kunststoff aufweist, der von einem äusseren Behälterteil (12) aus mindestens einer flexiblen, wärmeisolierenden Isolationsschicht wenigstens teilweise ummantelt ist.

2. Wärmeisolierter Behälter (1) nach Anspruch 1, bei welchem der innere Behälterteil (11) aus Polyäthylen oder Polypropylen besteht.

3. Wärmeisolierter Behälter (1) nach Anspruch 1 oder 2, bei welchem der äussere Behälterteil (12) aus einer oder mehreren Schichten von geschäumtem Kunststoff besteht.

4. Wärmeisolierter Behälter (1) nach einem der Ansprüche 1 bis 3, mit einem äusseren Behälterteil (12) aus geschäumtem Polyurethan, geschäumtem Polyethylen oder geschäumtem Santopren, oder aus mehreren Schichten des gleichen Kunststoffs oder verschiedener dieser Kunststoffe.

5. Wärmeisolierter Behälter (1) nach einem der Ansprüche 1 bis 4, bei welchem die Oberfläche des äusseren (12) und/oder des inneren (11) Behälterteils wenigstens teilweise mit einer wärmereflektierenden Schicht beschichtet ist.

6. Wärmeisolierter Behälter (1) nach einem der Ansprüche 1 bis 5, mit einem Verschluss (14), der mit einem Gewinde (13) oder einer Schnappeinrichtung mit dem inneren (11) und/oder dem äusseren (12) Behälterteil verbunden ist.

7. Wärmeisolierter Behälter (1) nach Anspruch 6 bei welchem der Verschluss (14) einen Trinknippel (140) mit Schnappverschluss oder Ausziehverschluss (141) aufweist.

8. Wärmeisolierter Behälter (1) bei welchem die Aussenfläche der Isolationsschicht (12) reliefartige Strukturen (15, 16) aufweist.

9. Verfahren zum Herstellen eines wärmeisolierten Behälters (1) nach einem der Ansprüche 1 bis 8 **gekennzeichnet durch** die Verfahrensschritte
herstellen des innern Behälterteils (11);
einlegen des inneren Behälterteils (11) in eine Form;
schliessen der Form;
umspritzen bzw. umschäumen des inneren Behälterteils in der geschlossenen Form und erzeugen des äusseren Behälterteils (12) **durch** umspritzen und schäumen, bzw. umschäumen der inneren Behälterteils (11) mit Kunststoff;
entnehme des wärmeisolierten Behälters (1) aus der Form.

10. Verfahren nach Anspruch 9, bei welchem der innere Behälterteil (11) durch Spritzblasen hergestellt ist.
